# EUROPEAN PATENT SPECIFICATION

(11) **EP 4 115 177 B1**
(45) Date of publication and mention of the grant of the patent: **11.09.2024**
(21) Application number: 21710592.3
(22) Date of filing: 02.03.2021
(51) Int. Cl.: B03C 1/033, B03C 1/30, B03C 1/28, B01L 3/00, G01N 1/10, B01D 43/00

(54) **ELECTROMAGNETIC SAMPLING DEVICE PROTECTED IN A SEPTUM PIERCING NEEDLE**
ELEKTROMAGNETISCHE PROBENAHMEVORRICHTUNG MIT SCHUTZ IN EINER SEPTUMDURCHSTECHNADEL
DISPOSITIF D'ÉCHANTILLONNAGE ÉLECTROMAGNÉTIQUE PROTÉGÉ DANS UNE AIGUILLE DE PERFORATION DE SEPTUM

(30) Priority: 02.03.2020 US 202062984192 P
(43) Date of publication of application: 11.01.2023
(73) Proprietor: DH Technologies Development Pte. Ltd., Singapore 739256 (SG)
(72) Inventor: ARNOLD, Don W., Concord, Ontario L4K 4V8 (CA); COVEY, Thomas R., Concord, Ontario L4K 4V8 (CA); LIU, Chang, Concord, Ontario L4K 4V8 (CA)
(74) Representative: J A Kemp LLP
(86) International application number: PCT/IB2021/051743
(87) International publication number: WO 2021/176359

(56) References cited:
- US-A1- 2009 053 689
- US-B1- 6 649 419
- RASOLZADEH FAHIMEH ET AL: "Magnetic fiber headspace solid-phase microextraction coupled to GC-MS for the extraction and quantitation of polycyclic aromatic hydrocarbons", MIKROCHIMICA ACTA, SPRINGER VERLAG, VIENNA, AT, vol. 186, no. 7, 13 June 2019 (2019-06-13), pages 1 - 9, XP036835027, ISSN: 0026-3672, [retrieved on 20190613], DOI: 10.1007/S00604-019-3482-X

## Description

### Background

The present teachings are generally related to an electromagnetic device that can be employed in magnetic particle based sampling techniques.

Vacutainers and other similar tubes/vials with rubber caps are widely used in various fields, and particularly in clinical laboratories. Samples can be loaded and accessed in such containers through a needle piercing through the rubber cap without opening the container, thus reducing potential biohazard, sample contamination, and solvent evaporation.

Solid-phase microextraction (SPME) devices have been developed, which can perform sampling, sample preparation and extraction in one step, thus greatly simplifying sample analysis. Such SPME devices can include a fiber that is protected within a needle, which can be used to pierce a septum of a sealed container. Once the needle is inserted into the container, the fiber can be pushed further down to be immersed into the sample for extraction of one or more analytes of interest. After the extraction process, the fiber is pulled back into the protection needle and is removed from the sample vial.

Although SPME devices have been proved to be successful in extraction and transfer of samples, they exhibit certain shortcomings. For example, the binding capacity of a conventional SPME fiber is limited by its small surface area. Although significant enhancement of extraction efficiency can be obtained when an SPME membrane having a larger surface area is employed, the integration of an SPME membrane with a rubber piercing needle is difficult.

US 6,649,419 B1 discloses method and apparatus for protein manipulation.

### Summary

In accordance with the present invention, there is disclosed an electromagnetic sampling device, comprising a needle comprising a hollow housing extending from a proximal end to a distal end, and an electromagnet comprising an electromagnetic coil and a metal core, wherein an activation of said electromagnetic coil magnetizes the metal core and causes the metal core to attract magnetic particles; wherein at least a portion of said metal core is extendible through said hollow housing of the needle; wherein the metal core is configured to transition between: an extended position in which the distal end of the metal core extends beyond the distal end of the needle's hollow housing, and a retracted position in which the distal end of the metal core and any magnetic particles attached thereto are positioned within the needle's housing.

The electromagnetic sampling device further comprises a flange that is coupled to said metal core for moving the metal core between the extended and retracted positions. In some embodiments, the needle's housing is configured at its distal end for piercing a septum employed to seal a container.

In some embodiments, the electromagnet is positioned outside of the needle's hollow housing.

The metal core can be configured to collect a plurality of magnetic particles disposed in the container when the metal core is magnetized via activation of the electromagnetic coil. In some embodiments, the hollow housing of the needle is substantially cylindrical. By way of example, in some embodiments, such a hollow cylindrical housing can have an inner diameter equal to or greater than about 0.5 mm. By way of example, the inner diameter of the hollow cylindrical housing can be in range of about 0.5 mm to about 10 mm.

In some embodiments, the needle's housing comprises a magnetic shielding material, such as a ferromagnetic metal or MuMetal. In some embodiments, the metal core can be formed of any of silicon steel, or ferrite.

In some embodiments, in an extended position, the distal end of the metal core extends beyond the distal end of the needle's housing for a length in a range of about 1 mm to about 100 mm.

In a related aspect, a method of collecting magnetic particles from a particle container and transferring the collected magnetic particles to a container sealed by a septum using an electromagnetic sampling device according to the present teachings is disclosed. Such a method can include inserting at least the distal end of the needle within a container containing a plurality of magnetic particles. Typically, the distal end of the needle is inserted into the container with the metal core in a retracted position. Subsequently, the metal core can be transitioned from the retracted position to the extended position such that the distal end of the metal core will be in proximity of the magnetic particles. The electromagnetic coil can be activated so as to magnetize the metal core and at least some of the magnetic particles can be captured via the magnetized metal core. The metal core and the associated collected magnetic particles can then be transitioned from the extended position into the retracted position and the needle and the captured metal particles can be removed from the particle container.

The needle can then be used to pierce a septum of a sealed container in which one or more target analytes are disposed and at least the distal end of the needle can be inserted into the sealed container. The metal core can be transitioned from the retracted position into the extended position and the electromagnet can be deactivated so as to release the captured magnetic particles into the container in which the target analyte(s) are disposed. In some embodiments, the magnetic particles are functionalized, e.g., coated, so as to capture the target analytes. By way of example, in some embodiments, the magnetic particles can be functionalized with antibodies that exhibit specific binding to the target analytes. In other embodiments, the magnetic particles can be functionalized with C18, antibody or any other suitable moiety.

In some embodiments, the mixing of the magnetic particles is performed so as to facilitate the capture of the target analytes by those particles. Such mixing can be achieved, for example, via a AC mixing device. In some embodiments, an RF source can be coupled to the electromagnetic sampling device to apply an AC signal to its metal core so as to facilitate 3-dimensional (3D) mixing of the magnetic particles. In some such embodiments, the AC signal can have a frequency in a range of about 1 Hz to about 400 Hz. The field strength generated by the AC signal can be, for example, in a range between 50 to 200 mT, e.g., in a range of about 20 to 100 mT.

The metal core can then be retracted to bring the magnetic particles together with the target analytes attached thereto into the needle's housing. The needle can then be removed from the target container to extract the magnetic particles and the associated attached target analytes. In some embodiments, the distal end of the needle can be inserted into an open port sampling interface of a mass spectrometer and the magnetic particles can be released into the mass spectrometer, via transitioning the metal core from a retracted position into an extended position and deactivating the electromagnet. In some embodiments, the magnetic particles to which analytes are attached are washed prior to introducing them into the open port sampling interface.

In some embodiments, the electromagnet is kept energized as a continuous liquid flow in the OPP washes out analytes from the magnetic particles (beads). In some embodiments, the magnetic particles can be released into the OPP interface and an electromagnetic mixer can be used to mix the released particles in the OPP sampling port. By way of example, the teachings of U.S. Published Application 2018/0369831, can be employed for such mixing of the magnetic particles. Alternatively, the teachings of U.S. Published Application 2020/0043712, can be employed to provide such mixing of the magnetic particles. Alternatively, in some embodiments, the magnetic particles can enter the OPP interface and they travel to the drain or can be trapped/collected somewhere downstream.

Further understanding of various aspects of the present teachings can be obtained by reference to the following detailed description in conjunction with the associated drawings, which are described briefly below.

### Brief Description of the Drawings

FIGs. 1A and 1B schematically depict an electromagnetic device according to an embodiment of the present teachings,
FIG. 2 depicts an electromagnetic device according to the present teachings inserted into a container that contains a plurality of magnetic particles,
FIG. 3A depicts the electromagnetic device of FIG. 2 with the magnetic core together with magnetic particles attached thereto in a retracted position, where the distal end of the needle is employed for piercing a septum of a sealed container in which one or more target analytes are disposed,
FIG. 3B shows the electromagnetic device of FIG. 3A with the magnetic core and the attached magnetic particles retracted into the needle's housing,
FIG. 4 is a flow chart depicting various steps in a method according to an embodiment for extracting magnetic particles from a container and transferring the extracted magnetic particles to another container,
FIG. 5 is a schematic view of a fluid mixing system, which can be employed to agitate and mix a plurality of magnetic particles.

### Detailed Description

The present teachings are generally directed to an electromagnetic sampling device, which includes a protective needle and an electromagnet comprising an electromagnetic coil and a magnetizable metal core that extends at least partially through the hollow housing of the protective needle. The metal core can be transitioned between an extended and a retracted position to allow transferring magnetic particles from one container to another. In some embodiments, the electromagnetic sampling device can be employed to introduce analytes attached to a plurality of magnetic particles into an input port of a mass spectrometer.

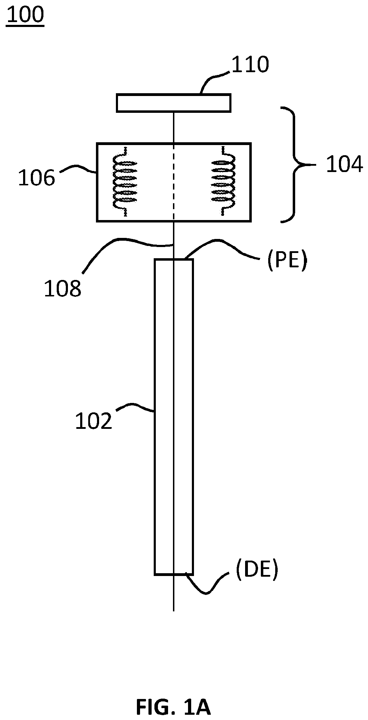

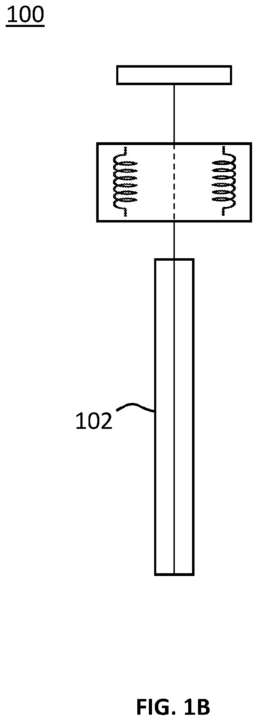

FIGs. 1A and 1B schematically depict an electromagnetic sampling device **100** according to an embodiment, which includes a needle **102** characterized by a hollow cylindrical housing, which extends from a proximal end (PE) to a distal end (DE). In some embodiments, the distal end of the needle is configured for piercing a septum of a sealed container, as discussed in more detail below.

The electromagnetic sampling device **100** further includes an electromagnet **104** that has an electromagnetic coil 106 and a magnetizable metal core **108** that can be magnetized by the electromagnetic coil, when the coil is activated. The metal core **108** extends through the hollow enclosure of the needle's housing from its proximal end to its distal end. A flange **110** attached to the metal core allows transitioning the magnetizable metal core from a retracted position in which a distal end of the metal core is within the needle's housing (FIG. 1B) into an extended position in which the distal end of the metal core extends beyond the distal end of the needle's housing (FIG. 1A). As discussed in more detail below, once magnetized, in the extended position, the metal core can collect magnetic particles disposed within a particle container, which can then be transferred to another container containing one or more analytes of interest. In some embodiments, the metal core is transitioned by a mechanical actuator. In some embodiments, the activation of the electromagnetic coil can be linked to the location of the metal core. For example, in one embodiment, the electromagnetic coil is energized when the metal core is in an extended position and the electromagnetic coil is de-energized when the metal core is in a retracted position.

As discussed in more detail below, in many embodiments, the magnetic particles are functionalized, e.g., coated, with one or more moieties that can specifically bind to one or more analytes to allow their extraction, e.g., from a container. Further, in some embodiments, the target analytes extracted via the magnetic particles can be introduced into an open port interface of a mass spectrometer.

As discussed in more detail below, the needle's distal end is shaped and sized so as to allow its penetration through a septum of a sealed container. As noted above, in this embodiment, the needle **102** has a hollow housing that is substantially cylindrical and has an inner diameter equal to or greater than about 0.5 mm. By way of example, in some embodiments, the inner diameter of the needle's housing can be in a range of about 0.5 mm to about 10 mm. In general, the inner diameter of the needle's housing is selected to ensure that it can accommodate the metal core (and magnetic particles collected by the metal core as discussed more below) and further allow using the needle to pierce through a septum sealing a container. The needle can have a variety of different lengths. By way of example, the length of the needle (i.e., the distance between its proximal and distal ends) can be in a range of about 0.5 cm to about 20 cm.

In general, the diameter of the portion of the metal core intended to be received within the needle's housing is selected so as to allow its insertion into the needle's housing with sufficient clearance relative to the needle's inner wall such that magnetic particles collected by the distal end of the needle can be brought into the needle's housing when the metal core is transitioned from the extended position into the retracted position. By way of example, in some embodiments, the metal core (or at least a portion thereof that is intended for insertion into the needle's housing), can have a diameter in a range of about 0.1 mm to about 10 mm, e.g., in a range of about 0.3 mm to about 5 mm. The length of the portion of the metal core that extends beyond the distal end of the needle's housing in the extended position can be, for example, in a range of about 1 mm to about 10 mm.

The needle can be formed of a variety of different materials. In this embodiment, the needle is formed of a magnetic shielding material. The use of a magnetic shielding material for forming needle can advantageously inhibit, and preferably prevent, the magnetic particles from being trapped on the external surface of the needle. Some suitable examples of such magnetic shielding materials include, without limitation, a ferromagnetic metal or MuMetal (a nickel-iron soft ferromagnetic alloy having a high permeability).

In this embodiment, the electromagnetic coil **106** is positioned outside the needle. In some embodiments, the electromagnetic coil assembly can have an outer diameter, for example, in a range of about 0.1 to about 100 mm, e.g., about 20 mm.

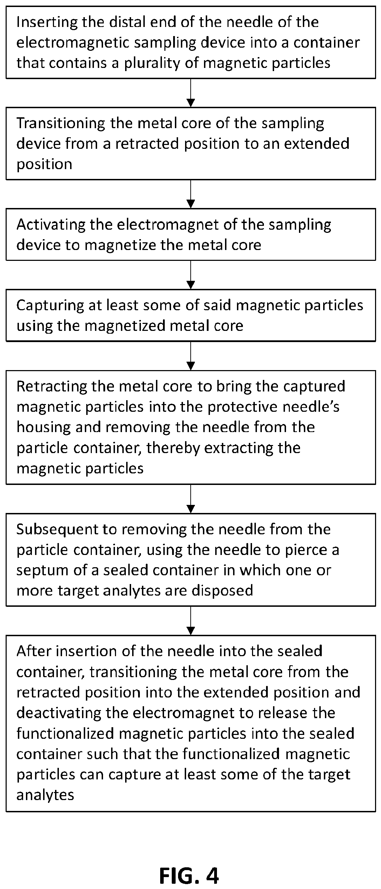

With continued reference to FIGs. 1A, 1B as well as FIGs. 2, 3A and 3B and the flow chart of FIG. 4, the above electromagnetic sampling device **100** can be used to collect magnetic particles (herein also referred to as magnetic beads) contained in a particle container and transfer those particles to another container in which one or more analytes of interest are contained. The magnetic particles can be formed, e.g., from a magnetic metal, such as a magnetic alloy. By way of example, in some embodiments, the magnetic particles can have a silica core with a metal coating, or can have metal cores. In some embodiments, the outer surfaces of the magnetic particles can be functionalized, e.g., with an antibody or C18, to allow the magnetic particles to bind to one or more analytes of interest.

For example, in one method for transferring magnetic particles from one container to another using an electromagnetic sampling device according to the present teachings, at least the distal end of the needle **102** is inserted into a particle container **200** in which a plurality of magnetic particles **202** are disposed. As indicated above, the magnetic particles can be functionalized to collect one or more analytes of interest.

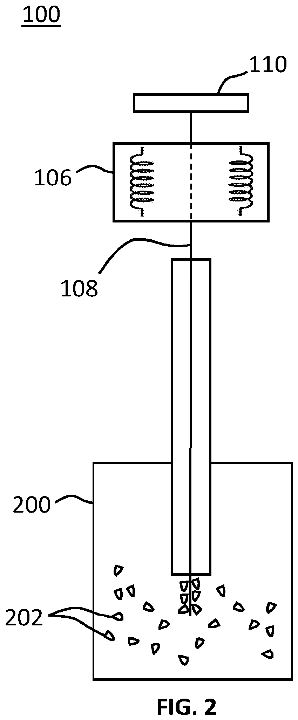

Typically, such insertion of the needle into the particle container is done with the magnetizable metal core **108** in a retracted position within the needle's housing, though in other cases, the needle can be inserted into the particle container with the magnetizable metal core in an extended position. The magnetizable metal core **108** can then be transitioned from its retracted position into its extended position using the flange **110** such that the distal end of metal core is in the vicinity of the magnetic particles, as shown in FIG. 2. The electromagnetic coil **106** can be activated (either before or after transitioning the metal core from a retracted position to an extended position) so as to magnetize the metal core. The distal end of the magnetized metal core can then attract the magnetic particles so as to collect at least a portion of those particles, as shown schematically in 2.

The distal end of the metal core and the magnetic particles attached thereto can then be retracted into the needle's protective housing and the needle can be removed from the particle container. The electromagnetic coil remains energized to ensure that the magnetic particles continue to remain attached to the magnetized distal end of the metal core. In many embodiments, the maximum of the magnetic field strength is at the tip of the metal core, where typically most of the magnetic particles are trapped. To quantitatively aliquot the magnetic particles out, in some embodiments, the magnetic particles are suspended in the solution and can be pre-agitated (e.g., via mechanical shaking) or with the electromagnetic mixer.

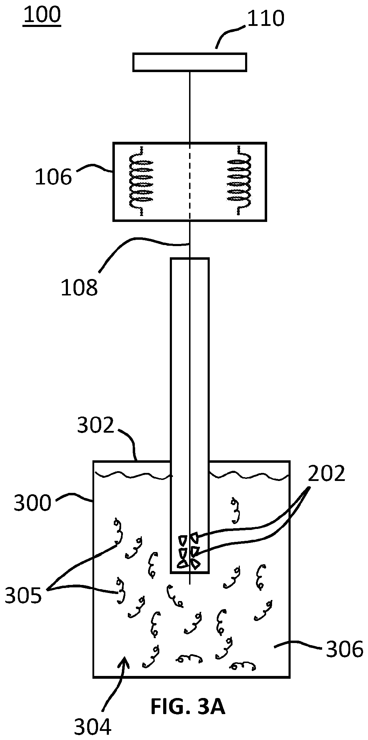

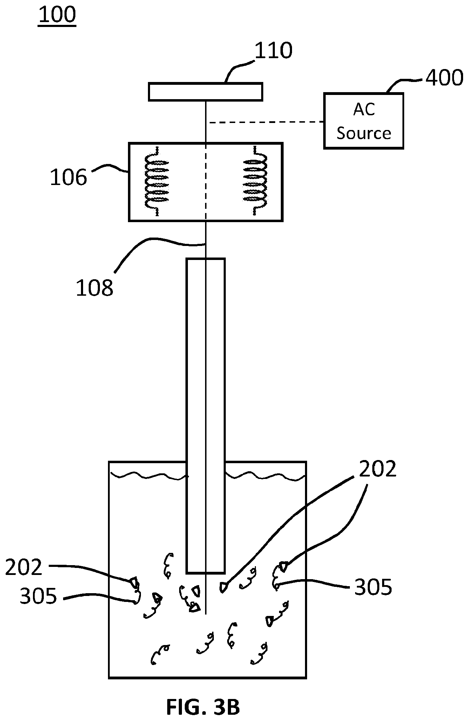

The distal end of the needle can then be employed to pierce a septum **302** sealing a container **300** in which a sample **304** containing at least one analyte of interest **305** is disposed, as shown schematically in FIG. 3A. For example, the analyte can be dispersed within a medium **306,** such as a liquid. Once inserted into the sealed container **300,** the metal core **108** can be transitioned from the retracted position into the extended position so as to bring the distal end of the metal core in vicinity of the analyte **304,** as shown in FIG. 3B. The electromagnetic coil can then be deactivated so as to demagnetize the metal core, thereby releasing the captured magnetic particles into the container **300.**

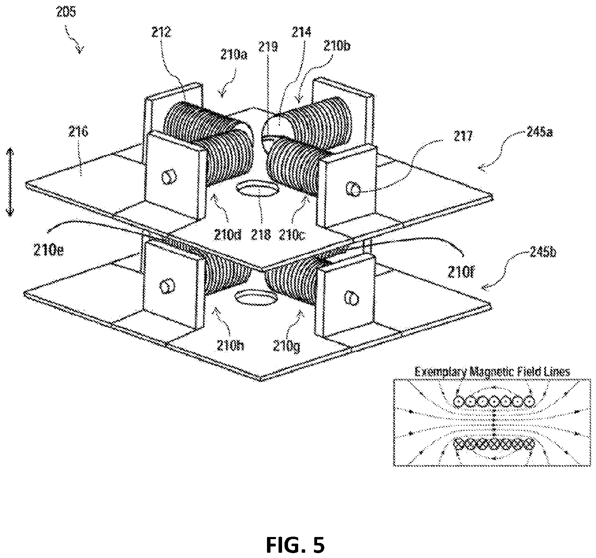

In some embodiments, the released functionalized magnetic particles can be manipulated to facilitate the capture of the target analyte(s) in the sample. By way of example, AC mixing of the functionalized released particles can be used to facilitate capture of the target analyte(s) by the released particles. For example, published PCT Application No. PCT/IB2018/050399 entitled "Electromagnetic Assemblies for Processing Fluid," discloses methods and systems for mixing fluids, which can be employed in some embodiments of the present teachings. This publication generally discloses a fluid processing system that includes a magnetic assembly having a plurality of magnetic structures that are configured to generate a magnetic field gradient within a fluid container. The magnetic structures may be formed as a plurality of electromagnets that may be individually actuated by a controller, where each electromagnet can generate a magnetic field within the container. More specifically, FIG. 2 of this publication, which is reproduced herein as FIG. 5, depicts such a fluid processing magnetic assembly 204 that includes an upper magnetic structure 245a and a lower magnetic structure 245b, each of which includes four electromagnets 210 comprising an electrically-conductive wire 212 in the form of a coil. The inner ends of the electromagnets 210a-d are spaced apart from the central axis so as to receive a fluid container therebetween. An AC signal can be applied to the various electromagnets 210a-d such that the magnetic field gradients change over time, thereby causing the fluid to experience mixing due to the corresponding movement of magnetic particles within the fluid container.

Further, in some embodiments, as shown schematically in FIG. 3B, an RF source 400 can be coupled to the metal core **108** to apply an RF signal thereto in order to enhance the 3-D mixing of the magnetic particles, e.g., via mixing the medium in which the analyte is dispersed. The mixing of the particles can advantageously enhance their ability to capture the analyte(s) of interest.

Subsequent to capturing the analyte(s) of interest, the electromagnetic sampling device **100** can be used to remove the magnetic particles from the sealed container. In particular, the electromagnetic coil **106** can be re-energized to magnetize the metal core and the magnetized metal core can be employed to capture the magnetic particles, e.g., by trapping the particles at the distal end of the metal core. The metal core together with the captured magnetic particles can be retracted into the protective needle's housing and the needle can be removed from the sealed container.

In some embodiments, the magnetic particles can include at least two sets of particles that are functionalized differently so as to capture different types of analytes. For example, in some such embodiments, one set of magnetic particles can be functionalized so as to capture proteins and another set of magnetic particles can be functionalized so as to capture lipids. In such cases, sequential extraction of different analytes within a sample using different magnetic particles can be performed independently using the methods discussed above. In such embodiments, the extraction of one analyte does not adversely affect the extraction of another analyte.

In some embodiments, functionalized magnetic particles can be employed for pre-treatment of an analyte of interest. By way of example, trypsin-coated magnetic particles can be introduced into a sample for digestion of one or more analytes of interest. The trypsin-coated magnetic particles can then be removed and C18 functionalized magnetic particles can be introduced into the sample, e.g., to extract peptides.

In some embodiments, the sampling device can be mechanically connected to a manipulator. The manipulator can be configured to operatively position the sampling device above a sample such that the distal end extends to contact a sample in a first container when in the extended position and retracts the distal end away from the sample when in a retracted position. In some embodiments, the manipulator can include a robotic arm. In some embodiments, the manipulator can be further configured to and be operative to locate the sampling device above a second container after capturing the magnetic particles from a first container. The second container can contain a liquid (e.g., solvent) that can be utilized to wash the distal end and any magnetic particles contained therein. In some embodiments, the manipulator is further configured to and is operative to position the sampling device opposite the open end of an open port sampling interface such that when in the extended position, the distal end extends and is immersed into the solvent flowing at the open end of the open port sampling interface and retracts out of the solvent when retracted into the retracted position.

An electromagnetic sampling device according to the present teachings provides a number of advantages. For example, such a device can provide a higher surface area for capturing magnetic particles, thereby increasing extraction efficiency. Further, such an electromagnetic sampling device can be integrated with RF frequency mixing, as discussed above.

## Claims

1. An electromagnetic sampling device (100), comprising:
a needle (102) comprising a hollow housing extending from a proximal end (PE) to a distal end (DE), and
an electromagnet (104) comprising an electromagnetic coil (106) and a metal core (108), wherein activation of said electromagnetic coil magnetizes the metal core and causes the metal core to attract magnetic particles;
wherein at least a portion of said metal core is extendible through said hollow housing of the needle;
**characterized in that** the metal core is configured to transition between:
an extended position in which the distal end of the metal core extends beyond the distal end of the needle's hollow housing, and
a retracted position in which the distal end of the metal core and any magnetic particles attached thereto are positioned within the needle's housing.

2. The electromagnetic sampling device of claim 1, further comprising a handle coupled to said metal core for moving the metal core between said extended and retracted positions.

3. The electromagnetic sampling device of claim 1, wherein said needle's housing is configured at its distal end for piercing a septum (302) employed to seal a container (300).

4. The electromagnetic sampling device of claim 3, wherein said electromagnetic coil is positioned outside of the needle's hollow housing.

5. The electromagnetic sampling device of claim 3, wherein magnetic metal core is configured to collect a plurality of magnetic particles (202) contained within said container.

6. The electromagnetic sampling device of claim 5, wherein said hollow housing of the needle is substantially cylindrical.

7. The electromagnetic sampling device of claim 6, wherein said substantially cylindrical housing has an inner diameter equal to or greater than about 2 mm; or
said inner diameter of the needle's housing is in a range of about 0.5 mm to about 10 mm.

8. The electromagnetic sampling device of claim 1, wherein said needle's housing comprises a magnetic shielding material;
wherein, optionally, said magnetic shielding material comprises any of ferromagnetic metal of MuMetal.

9. The electromagnetic sampling device of claim 1, wherein said metal core comprises any of silicon steel or ferrite; and/or
wherein said distal end of the metal core extends beyond the distal end of the needle's housing for a length in a range of about 1 mm to about 100 mm.

10. A method of collecting magnetic particles from a particle container and transferring the collected magnetic particles to a container sealed by a septum using the electromagnetic sampling device of any one of claims 1 to 12, said method comprising:
inserting at least a distal end of the needle within a container containing a plurality of magnetic particles with the metal core in a retracted position,
transitioning said metal core from the retracted position to the extended position such that said distal end of the metal core is in proximity of said magnetic particles,
activating said electromagnet so as to magnetize said metal core, and
collecting at least a portion of said magnetic particles via a distal end of said metal core.

11. The method of claim 10, further comprising transitioning said metal core and the associated collected magnetic particles from said extended position into said retracted position.

12. The method of claim 11, further comprising removing said needle from the container.

13. The method of claim 12, further comprising using a distal end of the needle to pierce said septum of the sealed container and introduce at least said distal end of the needle into the sealed container.

14. The method of claim 13, further comprising transitioning said metal core from the retracted position to the extended position so as to move said collected magnetic particles from inside of the needle's housing to outside thereof.

15. The method of claim 14, further comprising deactivating said electromagnet so as to release said collected magnetic particles into said sealed container;
wherein, optionally, said magnetic particles are functionalized so as to capture one or more target analytes within said sealed container; and the method optionally further comprises removing said needle from the sealed container so as to remove said magnetic particles and the associated captured target analytes from the container.

## Patentansprüche

1. Elektromagnetische Probenahmevorrichtung (100), umfassend:
eine Nadel (102), umfassend ein hohles Gehäuse, das sich von einem proximalen Ende (PE) zu einem distalen Ende (DE) erstreckt, und
einen Elektromagneten (104), umfassend eine elektromagnetischen Spule (106) und einen Metallkern (108), wobei eine Aktivierung der elektromagnetischen Spule den Metallkern magnetisiert und bewirkt, dass der Metallkern magnetische Teilchen anzieht;
wobei mindestens ein Abschnitt des Metallkerns durch das hohle Gehäuse der Nadel ausfahrbar ist;
**dadurch gekennzeichnet, dass** der Metallkern konfiguriert ist, um zwischen Folgendem überzugehen:
einer ausgefahrenen Position, in der sich das distale Ende des Metallkerns über das distale Ende des hohlen Gehäuses der Nadel erstreckt, und
einer eingezogenen Position, in der das distale Ende des Metallkerns und daran angelagerte magnetische Teilchen in dem Gehäuse der Nadel positioniert sind.

2. Elektromagnetische Probenahmevorrichtung nach Anspruch 1, ferner umfassend einen Griff, der mit dem Metallkern gekoppelt ist, um den Metallkern zwischen der ausgefahrenen und der eingezogenen Position zu bewegen.

3. Elektromagnetische Probenahmevorrichtung nach Anspruch 1, wobei das Gehäuse der Nadel an ihrem distalen Ende zum Durchstechen eines Septums (302) konfiguriert ist, das zum Verschließen eines Behälters (300) eingesetzt wird.

4. Elektromagnetische Probenahmevorrichtung nach Anspruch 3, wobei die elektromagnetische Spule außerhalb des hohlen Gehäuses der Nadel positioniert ist.

5. Elektromagnetische Probenahmevorrichtung nach Anspruch 3, wobei der magnetische Metallkern konfiguriert ist, um eine Vielzahl von magnetischen Teilchen (202) zu sammeln, die in dem Behälter enthalten sind.

6. Elektromagnetische Probenahmevorrichtung nach Anspruch 5, wobei das hohle Gehäuse der Nadel im Wesentlichen zylindrisch ist.

7. Elektromagnetische Probenahmevorrichtung nach Anspruch 6, wobei das im Wesentlichen zylindrische Gehäuse einen Innendurchmesser gleich wie oder größer als etwa 2 mm aufweist; oder
der Innendurchmesser des Gehäuses der Nadel in einem Bereich von etwa 0,5 mm bis etwa 10 mm ist.

8. Elektromagnetische Probenahmevorrichtung nach Anspruch 1, wobei das Gehäuse der Nadel ein magnetisches Abschirmungsmaterial umfasst;
wobei optional das magnetische Abschirmungsmaterial ein beliebiges von einem ferromagnetischen Metall aus MuMetall umfasst.

9. Elektromagnetische Probenahmevorrichtung nach Anspruch 1, wobei der Metallkern ein beliebiges von Siliziumstahl oder Ferrit umfasst; und/oder wobei sich das distale Ende des Metallkerns über eine Länge in einem Bereich von etwa 1 mm bis etwa 100 mm über das distale Ende des Gehäuses der Nadel hinaus erstreckt.

10. Verfahren zum Sammeln von magnetischen Teilchen aus einem Teilchenbehälter und Übertragen der gesammelten magnetischen Teilchen in einen durch ein Septum verschlossenen Behälter unter Verwendung der elektromagnetischen Probenahmevorrichtung nach einem der Ansprüche 1 bis 12, das Verfahren umfassend:
Einführen mindestens eines distalen Endes der Nadel in einen Behälter, der eine Vielzahl von magnetischen Teilchen enthält, wobei der Metallkern in einer eingezogenen Position ist,
Überführen des Metallkerns aus der eingezogenen Position in die ausgefahrene Position, sodass das distale Ende des Metallkerns in der Nähe der magnetischen Teilchen ist, Aktivieren des Elektromagneten, um den Metallkern zu magnetisieren, und
Sammeln mindestens eines Teils der magnetischen Teilchen über ein distales Ende des Metallkerns.

11. Verfahren nach Anspruch 10, ferner umfassend ein Überführen des Metallkerns und der assoziierten gesammelten magnetischen Teilchen von der ausgefahrenen Position in die eingezogene Position.

12. Verfahren nach Anspruch 11, ferner umfassend ein Entfernen der Nadel aus dem Behälter.

13. Verfahren nach Anspruch 12, ferner umfassend ein Verwenden eines distalen Endes der Nadel, um das Septum des verschlossenen Behälters zu durchstechen und mindestens das distale Ende der Nadel in den verschlossenen Behälter einzuführen.

14. Verfahren nach Anspruch 13, ferner umfassend ein Überführen des Metallkerns aus der eingezogenen Position in die ausgefahrene Position, um die gesammelten magnetischen Teilchen aus dem Inneren des Gehäuses der Nadel nach außen zu bewegen.

15. Verfahren nach Anspruch 14, ferner umfassend ein Deaktivieren des Elektromagneten, um die gesammelten magnetischen Teilchen in den verschlossenen Behälter freizusetzen;
wobei optional die magnetischen Teilchen funktionalisiert sind, um einen oder mehrere Zielanalyten innerhalb des verschlossenen Behälters einzufangen; und das Verfahren optional ferner ein Entfernen der Nadel aus dem verschlossenen Behälter umfasst, um die magnetischen Teilchen und die assoziierten eingefangenen Zielanalyten aus dem Behälter zu entfernen.

## Revendications

1. Dispositif d'échantillonnage électromagnétique (100), comprenant :
une aiguille (102) comprenant un boîtier creux s'étendant d'une extrémité proximale (PE) à une extrémité distale (DE), et
un électro-aimant (104) comprenant une bobine électromagnétique (106) et un noyau métallique (108), l'activation de ladite bobine électromagnétique magnétisant le noyau métallique et amenant le noyau métallique à attirer les particules magnétiques ;
dans lequel au moins une partie dudit noyau métallique peut s'étendre à travers ledit boîtier creux de l'aiguille ;
**caractérisé en ce que** le noyau métallique est configuré pour faire la transition entre :
une position étendue dans laquelle l'extrémité distale du noyau métallique s'étend au-delà de l'extrémité distale du boîtier creux de l'aiguille, et
une position rétractée dans laquelle l'extrémité distale du noyau métallique et toutes particules magnétiques qui y sont fixées sont positionnées à l'intérieur du boîtier de l'aiguille.

2. Dispositif d'échantillonnage électromagnétique selon la revendication 1, comprenant en outre une poignée couplée audit noyau métallique pour déplacer le noyau métallique entre lesdites positions étendue et rétractée.

3. Dispositif d'échantillonnage électromagnétique selon la revendication 1, dans lequel ledit boîtier d'aiguille est configuré à son extrémité distale pour percer un septum (302) utilisé pour sceller un récipient (300).

4. Dispositif d'échantillonnage électromagnétique selon la revendication 3, dans lequel ladite bobine électromagnétique est positionnée à l'extérieur du boîtier creux de l'aiguille.

5. Dispositif d'échantillonnage électromagnétique selon la revendication 3, dans lequel le noyau métallique magnétique est configuré pour collecter une pluralité de particules magnétiques (202) contenues dans ledit récipient.

6. Dispositif d'échantillonnage électromagnétique selon la revendication 5, dans lequel ledit boîtier creux de l'aiguille est sensiblement cylindrique.

7. Dispositif d'échantillonnage électromagnétique selon la revendication 6, dans lequel ledit boîtier sensiblement cylindrique a un diamètre intérieur égal ou supérieur à environ 2 mm ; ou ledit diamètre intérieur du boîtier de l'aiguille est compris dans une plage d'environ 0,5 mm à environ 10 mm.

8. Dispositif d'échantillonnage électromagnétique selon la revendication 1, dans lequel ledit boîtier de l'aiguille comprend un matériau de protection magnétique ;
dans lequel, éventuellement, ledit matériau de protection magnétique comprend n'importe quel métal ferromagnétique de mu-métal.

9. Dispositif d'échantillonnage électromagnétique selon la revendication 1, dans lequel ledit noyau métallique comprend l'un quelconque de l'acier au silicium ou de la ferrite ; et/ou
dans lequel ladite extrémité distale du noyau métallique s'étend au-delà de l'extrémité distale du boîtier de l'aiguille sur une longueur comprise dans une plage d'environ 1 mm à environ 100 mm.

10. Procédé de collecte de particules magnétiques à partir d'un conteneur de particules et de transfert des particules magnétiques collectées vers un conteneur scellé par un septum en utilisant le dispositif d'échantillonnage électromagnétique selon l'une quelconque des revendications 1 à 12, ledit procédé comprenant les étapes consistant à :
insérer au moins une extrémité distale de l'aiguille dans un récipient contenant une pluralité de particules magnétiques avec le noyau métallique dans une position rétractée,
faire passer ledit noyau métallique de la position rétractée à la position étendue de telle sorte que ladite extrémité distale du noyau métallique soit à proximité desdites particules magnétiques,
activer ledit électro-aimant de manière à magnétiser ledit noyau métallique, et
collecter au moins une partie desdites particules magnétiques via une extrémité distale dudit noyau métallique.

11. Procédé selon la revendication 10, comprenant en outre la transition dudit noyau métallique et des particules magnétiques collectées associées depuis ladite position étendue vers ladite position rétractée.

12. Procédé selon la revendication 11, comprenant en outre le retrait de ladite aiguille du récipient.

13. Procédé selon la revendication 12, comprenant en outre l'utilisation d'une extrémité distale de l'aiguille pour percer ledit septum du récipient scellé et introduire au moins ladite extrémité distale de l'aiguille dans le récipient scellé.

14. Procédé selon la revendication 13, comprenant en outre la transition dudit noyau métallique de la position rétractée à la position étendue de manière à déplacer lesdites particules magnétiques collectées depuis l'intérieur du boîtier de l'aiguille vers l'extérieur de celui-ci.

15. Procédé selon la revendication 14, comprenant en outre la désactivation dudit électro-aimant de manière à libérer lesdites particules magnétiques collectées dans ledit récipient scellé ; dans lequel, éventuellement, lesdites particules magnétiques sont fonctionnalisées de manière à capturer un ou plusieurs analytes cibles à l'intérieur dudit récipient scellé ; et le procédé comprend éventuellement en outre le retrait de ladite aiguille du récipient scellé de manière à retirer lesdites particules magnétiques et les analytes cibles capturés associés du récipient.
